(19) Europäisches Patentamt
European Patent Office
Office européen des brevets

(11) EP 2 599 841 A1

(12) **EUROPEAN PATENT APPLICATION**

(43) Date of publication:
**05.06.2013 Bulletin 2013/23**

(51) Int Cl.:
***C09D 11/10*** *(2006.01)*

(21) Application number: **11191663.1**

(22) Date of filing: **02.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Agfa Graphics N.V.**
  **2640 Mortsel (BE)**
- **Agfa-Gevaert**
  **2640 Mortsel (BE)**

(72) Inventors:
- **Smet, Stefaan**
  **2640 Mortsel (BE)**
- **André, Xavier**
  **2640 Mortsel (BE)**

(54) **White inkjet inks**

(57) A white inkjet ink including a liquid ink vehicle; a first inorganic pigment with a refractive index greater than 1.60 having an average particle size A larger than 200 nm ; and a second inorganic pigment having an average particle size B between 40 nm and 90 nm; wherein the number of particles per mm$^3$ $N_{AB}$ complies with the relation:

$$N_{AB} = \sqrt{N_A \times N_B} \geq 7{,}500\, particles / mm^3$$

with $N_A$ representing the number of particles per mm$^3$ having a particle size in the range of A - 20 nm to A + 20 nm; $N_B$ representing the number of particles per mm$^3$ having a particle size in the range of B - 20 nm to B + 20 nm; and wherein the average particle size A is measured by transmission electron microscopy at a 13,500x magnification on a 10 µm thick coated layer of the white inkjet ink for all inorganic particles having a particle size larger than 100 nm; the average particle size B is measured by transmission electron microscopy at a 58,000x magnification on the same 10 µm thick coated layer of the white inkjet ink for all inorganic particles having a particle size of no more than 100 nm.

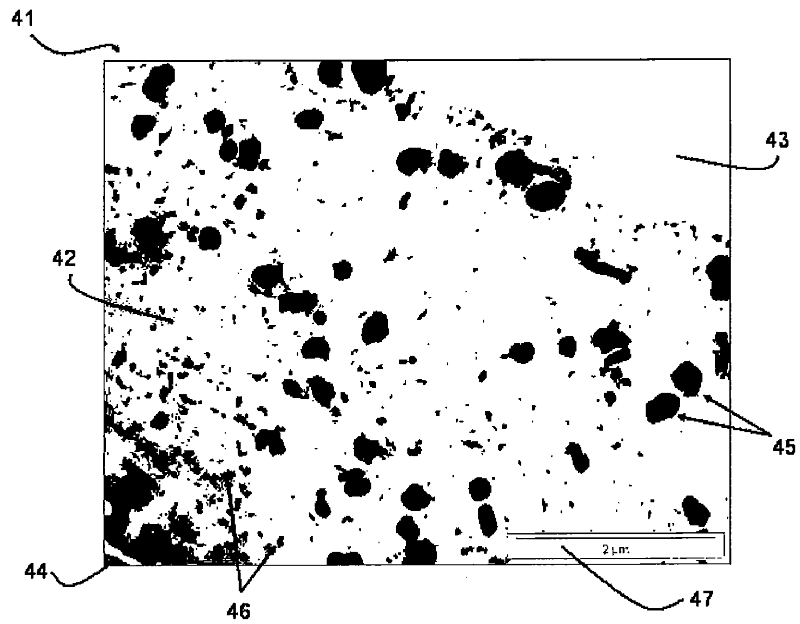


Fig. 4

EP 2 599 841 A1

## Description

## Technical Field

The present invention relates to the storage and use of white inkjet ink.

## Background Art

In inkjet printing, tiny drops of ink fluid are projected directly onto an ink-receiver surface without physical contact between the printing device and the ink-receiver. The printing device stores printing data electronically and controls a mechanism for ejecting the drops image-wise. Printing is accomplished by moving a print head across the ink-receiver or vice versa or both.

Pigments with a high refractive index, such as titanium dioxide, are used in white ink in order to obtain a sufficient opacity of the printed layer. Sedimentation of these dense particles in a low viscosity fluid, such as an inkjet ink, is a real challenge for ink formulators. Problems of clogging of inkjet print head nozzles and poor storage stability of the ink are direct consequences of sedimentation and aggregation of white pigments due to the difference in specific gravity between pigment particles and the liquid medium of the ink.

Various approaches have been used trying to overcome these problems. One approach is designing particles which exhibit less sedimentation. US 4880465 (VIDEOJET) discloses a non-pigmented white inkjet ink comprising hollow microspheres in a suitable ink vehicle. Sedimentation is drastically reduced but the opacity of such a printed white layer remains rather limited.

In EP 1388578 A (DAINIPPON INK) an ultraviolet-curable inkjet ink is disclosed comprising titanium oxide, a polymeric dispersant having a basic functional group, a photopolymerizable compound and a photoinitiator, wherein the titanium oxide is surface-treated substantially with silica. Although the incorporation of silica into the titanium oxide particle reduces the overall density of the white particle, such design of core-shell pigments also leads to an increase of the raw material cost while improving the sedimentation to a certain degree.

Another approach for improving the dispersion stability of white ink includes the design of specific dispersants. For example, US 2007259986 (DU PONT) discloses a radiation-curable inkjet white ink comprising a specified titanium dioxide with at least two dispersants wherein the first dispersant is an acidic polyester dispersant and the second one is an acrylic structured copolymer dispersant.

US 7850774 (HP) discloses an inkjet ink including an ink vehicle and a white pigment dispersed in the vehicle, wherein the pigment consists of particles less than 200 nm in diameter having a size distribution characterized by two peaks, in which at least 5 wt % of the particles have a mean average size greater than or equal to 100 nm and less than 200 nm, and at least 25 wt % of the particles have a mean average size less than or equal to 50 nm. The aqueous ink has enhanced stability and resistance to flocculation.

US 2010105807 (INCTEC) discloses an oil-based white inkjet ink comprising a white pigment, a glycol ether dialkyl ether compound solvent, a polymeric dispersant, and a specific acrylic resin. The white pigment is formed of titanium oxide fine particles coated with at least one of aluminum oxide and silicon oxide and further coated with a SiH-containing polysiloxane and dimethylpolysiloxane. Apparently the inventive inkjet inks exhibited no sedimentation of white pigment (criterion A of Evaluation 3) and for several comparative inkjet inks using specific polymers the sediment of white pigment disappeared upon shaking of the ink (criterion B of Evaluation 3).

Notwithstanding US 2010105807 (INCTEC), it seems fair to accept that it is an illusion to design a white inkjet ink capable of delivering high opaque layers but exhibiting no sedimentation over time. The formation of sediment at the bottom of a white inkjet ink container, especially after prolonged storage on a shelf, can often be reversed to a certain degree by shaking the ink container. However, it is observed that always sediment remains at the bottom of a white inkjet ink container which cannot be redispersed by shaking. In addition to a loss of raw material, this leads to consistency problems in inkjet printing since the whiteness of the printed white background layer varies with the concentration of the dispersed white pigment in the curable inkjet ink.

It is desirable to have a white inkjet ink improved for redispersing the sediment by shaking the ink container.

## Summary of invention

In order to overcome the problems described above, a white inkjet ink was prepared by combining a white pigment dispersion having an average particle size above 200 nm with a second pigment dispersion having an average particle size between 40 and 90 nm.

The skilled person would expect that the small particles having an average particle size between 40 and 90 nm would fill up the spaces between the larger white pigment particles thereby leading to a more compact sediment and thus more difficult to redisperse. However, surprisingly the contrary was found to be true as such a white inkjet ink could

be shaken up using only minor force to redisperse to a very large extent the sediment of the white pigment at the bottom of a stored ink container. The mechanism is not fully understood but it is believed that the underlying principle bears some resemblance to a ball bearing used to reduce rotational friction.

Preferred embodiments of the invention have been realised with a white inkjet ink as defined by claim 1.

Preferred embodiments of the invention have also been realised with a method of manufacturing a white inkjet ink as defined below.

Further objects of the invention will become apparent from the description hereinafter.

**Brief description of drawings**

Figure 1 shows a side view of an empty ink container (11) having a spout (14) with external threads to be closed by a sealing (13) and a screw cap (12).

Figure 2 shows a side view of an ink container (21) having a spout (24) with external threads closed by a sealing (23) and to be closed by a screw cap (22) including a white ink (26) and head space (25).

Figure 3 shows a side view of an ink container (31), known as a jerry can, having a spout (34) with external threads which can be closed by a sealing (not shown) and/or a screw cap not shown). The ink container includes a white ink (36) below the dotted line (37) depicting the ink surface in the interior of the ink container, where above the head space (35) is located.

Figure 4 is a TEM image (41) at a 13,500x magnification of a 10 μm thick coated layer of the white inkjet ink showing large first inorganic particles (45) and small second inorganic particles (46).

**Detailed description**

Definitions

The term "hiding power", a synonym for "covering power", means the degree to which a coated layer obscures the underlying material. It defines thus how efficient a white ink layer obscures, for example, a black background substrate.

The term "ink container" means any suitable vessel used for storing a white radiation curable ink, such as an ink bottle and a jerry can.

The term "headspace" means the volume left at the top of a filled ink container before sealing.

The term "C.I." is used in disclosing the present application as an abbreviation for Colour Index.

White Inkjet Inks

The white inkjet ink according to the present invention includes at least

a) a liquid ink vehicle;
b) a first inorganic pigment with a refractive index greater than 1.60 having an average particle size A larger than 200 nm ; and
c) a second inorganic pigment having an average particle size B between 40 nm and 90 nm;

wherein the number of particles per $mm^3$ $N_{AB}$ complies with the relation:

$$N_{AB} = \sqrt{N_A \times N_B} \geq 7{,}500\ particles / mm^3$$

with

$N_A$ representing the number of particles per $mm^3$ having a particle size in the range of A - 20 nm to A + 20 nm; $N_B$ representing the number of particles per $mm^3$ having a particle size in the range of B - 20 nm to B + 20 nm; and wherein the average particle size A is measured by transmission electron microscopy at a 13,500x magnification on a 10 μm thick coated layer of the white inkjet ink for all inorganic particles having a particle size larger than 100 nm; the average particle size B is measured by transmission electron microscopy at a 58,000x magnification on the same 10 μm thick coated layer of the white inkjet ink for all inorganic particles having a particle size of no more than 100 nm.

The first inorganic pigment, i.e. the white pigment, has a refractive index greater than 1.60 and is used to provide

the white inkjet ink its covering power. Pigment particles in an inkjet ink should be sufficiently small and narrow in distribution to permit free flow of the ink through the inkjet-printing device, especially at the ejecting nozzles. When the average diameter of the white pigment exceeds 500 nm the jet-out suitability of the white ink tends to be degraded. On the other hand, sufficient hiding power cannot be obtained when the average diameter is less than 150 nm. The numeric average particle size A of the white pigment is preferably from 200 to 500 nm, more preferably from 210 to 400 nm, and most preferably from 220 to 350 nm.

A pigment dispersion of the second inorganic pigment having an average particle size B between 40 nm and 90 nm is generally not white but transparent. Hence, it makes no sense to add such small particles to increase the covering power of the white inkjet ink.

The determination of the numeric average particle size has to be performed by transmission electron microscopy (TEM) since other techniques, such as e.g. photon correlation spectroscopy or dynamic light scattering, are incapable of measuring both the small and large particles of the bimodal particle distribution with sufficient accuracy.

The difference in average particle size between the first and second inorganic pigment is quite large making it necessary to make TEM images at two different magnifications, i.e. 13,500x for the particles larger than 100 nm and 58,000x for the particles not larger than 100nm. Any particles of 100 nm or less measured at the 13,500x magnification are ignored, since they would else be counted double when measuring the particle size at the 58,000x magnification. In the same way, particles having a particle size of more than 100 nm are ignored when measuring the particle size at the 58,000x magnification.

The white inkjet ink includes preferably between 8.0 wt% and 29.0 wt%, more preferably between 10.5 wt% and 24.0 wt%, and most preferably between 11.5 wt% and 20 wt% of the first inorganic pigment based on the total weight of the inkjet ink. If less than 8 wt% is used of the first inorganic pigment than the hiding power of the white ink is inferior, or otherwise a thicker white layer will be required to provide the same hiding power, which includes a penalization in flexibility of the printer material and in productivity. Amounts of 30 wt% or more of the first inorganic pigment usually increase the viscosity of the white inkjet ink to undesirable or unworkable levels.

The white inkjet ink includes preferably between 0.5 wt% and 10.0 wt%, more preferably between 1.0 wt% and 5.0 wt%, and most preferably between 1.5 wt% and 4.0 wt% of the second inorganic pigment based on the total weight of the inkjet ink.

The second inorganic pigment is preferably present in the white inkjet ink in an amount smaller than that of the first inorganic pigment. The ratio of the wt% of the first inorganic pigment over the wt% of the second inorganic pigment is preferably between 2:1 and 200:1, more preferably between 3:1 and 50:1 and most preferably between 4:1 and 15:1.

The first and second inorganic pigments may have a different chemical nature, e.g. the first inorganic pigment is a titanium dioxide pigment and the second inorganic pigment is a calcium carbonate pigment. The polymeric dispersants used for dispersing the chemically different first and second inorganic pigments are preferably also different, i.e. the first polymeric dispersant has a higher affinity for the titanium dioxide pigment and the second dispersant has a higher affinity for the calcium carbonate pigment.

Using a similar or the same type of pigment, e.g. a titanium dioxide pigment, for both the first and second inorganic pigments has the advantage that the affinity of the polymeric dispersant(s) will be the same or similar for both pigment surfaces. As a consequence there will be no or only minor desorption of the polymeric dispersant from one pigment to adsorb to the other pigment surface which may otherwise cause destabilization of the dispersion.

In a very preferred embodiment, the same polymeric dispersant is used with first and second inorganic pigments of the same chemical nature. In an even more preferred embodiment, the first and second inorganic pigments are made of the same material, preferably both made mainly of titanium dioxide.

The viscosity of the white inkjet ink is preferably smaller than 20 mPa.s at 45°C and at a shear rate of 1,000 $s^{-1}$, more preferably between 1 and 15 mPa.s at 45°C and at a shear rate of 1,000 $s^{-1}$. The viscosity of the white inkjet ink measured at 45°C with the "Robotic Viscometer Type VISCObot" from CAMBRIDGE APPLIED SYSTEMS corresponds to the viscosity measured at 45°C and at a shear rate of 1,000 $s^{-1}$.

The surface tension of the white inkjet ink is preferably in the range of about 20 mN/m to about 70 mN/m at 25°C, more preferably in the range of about 22 mN/m to about 40 mN/m at 25°C.

The white inkjet ink may further also contain at least one surfactant for obtaining good spreading characteristics on a substrate.

<u>First Inorganic Pigments</u>

The first inorganic pigment is responsible for all or the largest part of the hiding power of the white radiation curable inkjet ink according to the present invention.

The white radiation curable inkjet ink comprises a pigment with a refractive index greater than 1.60, preferably greater than 2.00, more preferably greater than 2.50 and most preferably greater than 2.60. Suitable pigments are given by <u>Table 1</u>. Preferably titanium dioxide is used for the pigment with a refractive index greater than 1.60.

**Table 1**

| C.I. Number | Chemical name | CAS RN |
|---|---|---|
| Pigment white 1 | Lead hydroxide carbonate | 1319-46-6 |
| Pigment white 3 | Lead sulfate | 7446-14-2 |
| Pigment white 4 | Zinc oxide | 1314-13-2 |
| Pigment white 5 | Lithopone | 1345-05-7 |
| Pigment white 6 | Titanium dioxide | 13463-67-7 |
| Pigment white 7 | Zinc sulfide | 1314-98-3 |
| Pigment white 10 | Barium carbonate | 513-77-9 |
| Pigment white 11 | Antimony trioxide | 1309-64-4 |
| Pigment white 12 | Zirconium oxide | 1314-23-4 |
| Pigment white 14 | Bismuth oxychloride | 7787-59-9 |
| Pigment white 17 | Bismuth subnitrate | 1304-85-4 |
| Pigment white 18 | Calcium carbonate | 471-34-1 |
| Pigment white 19 | Kaolin | 1332-58-7 |
| Pigment white 21 | Barium sulfate | 7727-43-7 |
| Pigment white 24 | Aluminum hydroxide | 21645-51-2 |
| Pigment white 25 | Calcium sulfate | 7778-18-9 |
| Pigment white 27 | Silicon dioxide | 7631-86-9 |
| Pigment white 28 | Calcium metasilicate | 10101-39-0 |
| Pigment white 32 | Zinc phosphate cement | 7779-90-0 |

Titanium oxide occurs in the crystalline forms of anatase type, rutile type and brookite type. The anatase type has a relatively low density and is easily ground into fine particles, while the rutile type has a relatively high refractive index, exhibiting a high covering power. Either one of these is usable in this invention as the first inorganic pigment. The use of the anatase type having a low density and a small particle size can achieve superior dispersion stability, ink storage stability and ejectability. The rutile type can reduce the total amount of titanium oxide, leading to improved storage stability and ejection performance of ink. The two different crystalline forms may also be used in combination as the first inorganic pigment.

For surface treatment of the titanium oxide, an aqueous treatment or a gas phase treatment may be applied, and an alumina-silica treating agent is preferably employed. Untreated-, alumina treated- or alumina-silica treated-titanium oxide are employable.

Preferred titanium dioxide pigments include one or more metal oxide surface coatings (such as silica, alumina, alumina-silica, boric acid, and zirconia) preferably present in an amount of from 0.1 wt % to 10 wt %, and preferably from 0.5 wt % to 3 wt %, based on the total weight of the titanium dioxide pigment. These coatings can provide improved properties including reducing the photoreactivity of the titanium dioxide. Commercial examples of such coated titanium dioxides include TiPure™ R700 and R900 (alumina-coated, available from E.I. DuPont de Nemours, Wilmington Del.), RDIS (alumina-coated, available from Kemira Industrial Chemicals, Helsinki, Finland), TiPure™ R796 (alumina and phosphate treated from DuPont), TiPure™ R706 (silica and alumina treated, available from DuPont, Wilmington Del.) and Tioxide™ TR52, a surface modified titanium dioxide from Huntsman Chemical Group. In a preferred embodiment, the titanium dioxide pigment is silica and alumina treated titanium dioxide pigment.

In a preferred embodiment, the first inorganic pigment with a refractive index greater than 1.60 in the white inkjet ink is a pigment mainly composed of titanium dioxide. Mainly composed of titanium dioxide means that preferably more than 50 wt%, more preferably more than 70 wt% and most preferably more than 80 wt% of the inorganic pigment consists of titanium dioxide.

Second Inorganic Pigments

Due to its small particle size, the second inorganic pigment does not contribute or only to a small extent to the hiding power of the white inkjet ink according to the present invention.

In one embodiment, the second inorganic pigment may be of a different chemical nature than the first inorganic pigment. For example, a cheaper pigment like silicon dioxide could be used in stead of a titanium dioxide pigment used as the first inorganic pigment. A different chemical nature of the second inorganic pigment can also be advantageously used in a security inkjet ink for verifying the authenticity of a printed object or document.

In a preferred embodiment, the second inorganic pigment has also a refractive index greater than 1.60.

The second inorganic pigment preferably has a much larger specific surface area measured by BET than the first inorganic pigment. The specific surface area of the first inorganic pigment is preferably smaller than 25 $m^2/g$, while the specific surface area of the second inorganic pigment is preferably greater than 30 $m^2/g$, more preferably greater than 50 $m^2/g$.

Preferred commercially available second inorganic pigments include Hombitec™ RM110 and RM300 from Sachtleben Chemie GmbH having a specific surface area of 100 $m^2/g$ respectively 70 $m^2/g$. A preferred commercially available first inorganic pigment Tioxide™ TR52 has a specific surface area of 11 $m^2/g$.

There are no specific limitations for the shape of the second inorganic pigment particles, but it has been observed that an anisotropic shape, such as a platelet or a needle shape, tend to improve the redispersibility of white sediment by shaking the white inkjet ink.

Dispersants

The pigments are preferably dispersed in the liquid ink vehicle by a polymeric dispersant. The polymeric dispersants here below are suitable for both the first and second inorganic pigments.

Suitable polymeric dispersants are copolymers of two monomers but they may contain three, four, five or even more monomers. The properties of polymeric dispersants depend on both the nature of the monomers and their distribution in the polymer. Copolymeric dispersants preferably have the following polymer compositions:

- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable polymeric dispersants are listed in the section on "Dispersants", more specifically [0064] to [0070] and [0074] to [0077], in EP 1911814 A (AGFA GRAPHICS).

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:

- DISPERBYK™ dispersants available from BYK CHEMIE GMBH;
- SOLSPERSE™ dispersants available from NOVEON;
- TEGOTM DISPERS™ dispersants from EVONIK;
- EDAPLAN™ dispersants from MÜNZING CHEMIE;
- ETHACRYL™ dispersants from LYONDELL;
- GANEX™ dispersants from ISP;
- DISPEX™ and EFKA™ dispersants from CIBA SPECIALTY CHEMICALS INC;
- DISPONER™ dispersants from DEUCHEM; and
- JONCRYL™ dispersants from JOHNSON POLYMER.

Particularly preferred polymeric dispersants include Solsperse™ dispersants from NOVEON, Efka™ dispersants from CIBA SPECIALTY CHEMICALS INC and Disperbyk™ dispersants from BYK CHEMIE GMBH. Particularly preferred dispersants are Solsperse™ 32000, 35000 and 39000 dispersants from NOVEON.

The polymeric dispersant is preferably used in an amount of 2 to 600 wt%, more preferably 5 to 200 wt%, most preferably 50 to 90 wt% based on the weight of the pigment.

Liquid Ink Vehicles

The liquid ink vehicle of the white inkjet ink can be aqueous or non-aqueous, but is preferably non-aqueous. In an industrial inkjet printing environment, aqueous inkjet inks tend to suffer more from latency problems than non-aqueous inkjet inks. The non-aqueous inkjet inks include organic solvent based, oil based and radiation curable ink vehicles. Oil based inkjet inks tend to have higher viscosity, thereby slowing down inkjet printing speeds. In the most preferred embodiment, the white inkjet ink is a radiation curable inkjet ink, since such an inkjet ink curable by UV radiation or electron beam radiation can also be applied to a substantially non-absorbing ink receiver. The white inkjet ink is most preferably curable by UV radiation because in contrast to e-beam, UV radiation allows for fast pincuring.

Suitable organic solvents include alcohols, aromatic hydrocarbons, ketones, esters, aliphatic hydrocarbons, higher fatty acids, carbitols, cellosolves, higher fatty acid esters. Suitable alcohols include methanol, ethanol, propanol and 1-butanol, 1-pentanol, 2-butanol, t.-butanol. Suitable aromatic hydrocarbons include toluene, and xylene. Suitable ketones include methyl ethyl ketone, methyl isobutyl ketone, 2,4-pentanedione and hexafluoroacetone. Also glycol, glycolethers, N-methylpyrrolidone, N,N-dimethylacetamid, N, N-dimethylformamid may be used.

Preferred examples of organic solvents are disclosed in [0133] to [0146] of EP 1857510 A (AGFA GRAPHICS).

In a radiation curable inkjet ink, organic solvent(s) are preferably fully replaced by one or more monomers and/or oligomers to obtain the liquid dispersion medium. Sometimes, it can be advantageous to add a small amount of an organic solvent to improve the dissolution of the dispersant. The content of organic solvent should be lower than 20 wt%, more preferably lower than 5 wt% based on the total weight of the inkjet ink and most preferably the curable inkjet ink doesn't include any organic solvent.

For oil based inkjet inks, the ink vehicle may include any suitable oil including aromatic oils, paraffinic oils, extracted paraffinic oils, naphthenic oils, extracted napthenic oils, hydrotreated light or heavy oils, vegetable oils and derivatives and mixtures thereof. Paraffinic oils can be normal paraffin types (octane and higher alkanes), isoparaffins (isooctane and higher iso-alkanes) and cycloparaffins (cyclooctane and higher cycloalkanes) and mixtures of paraffin oils.

Suitable examples of oils are disclosed in [0151] to [0164] of EP 1857510 A (AGFA GRAPHICS).

Polymerizable compounds

The white radiation curable inkjet ink contains polymerizable compounds preferably in an amount higher than 60 wt%, more preferably in an amount preferably higher than 70 wt% based on the total weight of the inkjet ink.

Any polymerizable compound commonly known in the art may be employed and includes any monomer, oligomer and/or prepolymer as long it allows obtaining a viscosity suitable for inkjet printing. A combination of monomers, oligomers and/or prepolymers may also be used. The monomers, oligomers and/or prepolymers may possess different degrees of functionality, and a mixture including combinations of mono-, di-, tri-and higher functionality monomers, oligomers and/or prepolymers may be used. The viscosity of the inkjet ink can be adjusted by varying the ratio between the monomers and oligomers.

Any method of conventional radical polymerization, photo-curing system using photo acid or photo base generator, or photo induction alternating copolymerization may be employed. In general, radical polymerization and cationic polymerization are preferred, and photo induction alternating copolymerization needing no initiator may also be employed. Furthermore, a hybrid system of combinations of these systems is also effective.

Cationic polymerization is superior in effectiveness due to lack of inhibition of the polymerization by oxygen, however it is expensive and slow, especially under conditions of high relative humidity. If cationic polymerization is used, it is preferred to use an epoxy compound together with an oxetane compound to increase the rate of polymerization. Radical polymerization is the preferred polymerization process.

Particularly preferred monomers and oligomers are those listed in [0106] to [0115] of EP 1911814 A (AGFA GRAPHICS).

The cationically polymerizable compound of the inkjet ink can be one or more monomers, one or more oligomers or a combination thereof.

Suitable examples of cationically curable compounds can be found in Advances in Polymer Science, 62, pages 1 to 47 (1984) by J. V. Crivello.

The cationic curable compound may contain at least one olefin, thioether, acetal, thioxane, thietane, aziridine, N-, O-, S- or P-heterocycle, aldehyde, lactam or cyclic ester group.

Examples of cationic polymerizable compounds include monomers and/or oligomers epoxides, vinyl ethers,

styrenes, oxetanes, oxazolines, vinylnaphthalenes, N-vinyl heterocyclic compounds, tetrahydrofurfuryl compounds.

The cationically polymerizable monomer can be mono-, di- or multifunctional or a mixture thereof.

A preferred class of monomers and oligomers which can be used in both radiation and cationically curable compositions are vinyl ether (meth)acrylates such as those described in US 6310115 (AGFA), incorporated herein by reference. Particularly preferred compounds are 2-(2-vinyloxyethoxy)ethyl (meth)acrylate, most preferably the compound is 2-(2-vinyloxyethoxy)ethyl acrylate

The monomers and oligomers used in the white radiation curable inkjet ink, especially for food packaging printing applications, are preferably purified compounds having no or almost no impurities, more particularly no toxic or carcinogenic impurities. The impurities are usually derivative compounds obtained during synthesis of the polymerizable compound. Sometimes, however, some compounds may be added deliberately to pure polymerizable compounds in harmless amounts, for example, polymerization inhibitors or stabilizers.

The white ink is often the first layer on a substrate. For improving adhesion on specific substrates, the white inkjet ink preferably comprises a polymerizable compound selected from the group consisting of isobornylacrylate, phenoxyethyl acrylate, tetrahydrofurfuryl acrylate, 2-(2-vinyloxyethoxy)ethyl (meth)acrylate and N-vinylcaprolactam.

In a preferred embodiment, the white inkjet ink includes 2-(2-vinyloxyethoxy)ethyl (meth)acrylate because this monomer allows to obtain very low viscosities at jetting temperatures.

The white inkjet ink preferably includes N-vinylcaprolactam, because this monomer becomes solid at room temperature and reduces the sedimentation due to the higher viscosity of the more concentrated inkjet ink.

The white radiation curable ink is preferably a non-aqueous ink. The term "non-aqueous" refers to a liquid carrier which should contain no water. However sometimes a small amount, generally less than 5 wt% of water based on the total weight of the composition or ink, can be present. This water was not intentionally added but came into the composition via other components as a contamination, such as for example polar organic solvents. Higher amounts of water than 5 wt% tend to make the non-aqueous liquids and inks instable, preferably the water content is less than 1 wt% based on the total weight of radiation curable composition or ink and most preferably no water at all is present

The white radiation curable ink preferably does not contain an organic solvent. But sometimes it can be advantageous to incorporate a small amount of an organic solvent to improve adhesion to the surface of a substrate after UV-curing. In this case, the added solvent can be any amount in the range that does not cause problems of solvent resistance and VOC, and preferably 0.1 - 10.0 wt%, and particularly preferably 0.1 - 5.0 wt%, each based on the total weight of the curable ink.

The white radiation curable inkjet ink may further also contain at least one polymerization inhibitor for improving the thermal stability of the ink.

<u>Initiators</u>

The white radiation curable inkjet ink preferably also contains an initiator. The initiator typically initiates the polymerization reaction. The initiator can be a thermal initiator, but is preferably a photo-initiator. The photo-initiator requires less energy to activate than the monomers, oligomers and/or prepolymers to form a polymer. The photo-initiator in the curable inkjet ink is preferably a Norrish type I initiator, a Norrish type II initiator or a photoacid generator. A combination of different types of initiator, for example, a photo-initiator and a thermal initiator can also be used.

Thermal initiator(s) suitable for use in the curable (inkjet) ink include tert-amyl peroxybenzoate, 4,4-azobis(4-cyanovaleric acid), 1,1'-azobis(cyclohexanecarbonitrile), 2,2'-azobisisobutyronitrile (AIBN), benzoyl peroxide, 2,2-bis ( tert-butylperoxy)butane, 1,1-bis( tert-butylperoxy)cyclohexane,1,1-bis(tert-butylperoxy)cyclohexane, 2,5-bis( tert-butylperoxy)-2,5-dimethylhexane, 2,5-bis(tert-butylperoxy)-2,5-dimethyl-3-hexyne, bis(1-(tert-butylperoxy)-1-methylethyl)benzene, 1,1-bis(tert-butylperoxy)-3,3,5-trimethylcyclohexane, tert-butyl hydroperoxide, tert-butyl peracetate, tert-butyl peroxide, tert-butyl peroxybenzoate, tert-butylperoxy isopropyl carbonate, cumene hydroperoxide, cyclohexanone peroxide, dicumyl peroxide, lauroyl peroxide, 2,4- pentanedione peroxide, peracetic acid and potassium persulfate.

In a preferred embodiment, the photoinitiator is a free radical initiator. A free radical photoinitiator is a chemical compound that initiates polymerization of monomers and oligomers when exposed to actinic radiation by the formation of a free radical. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination.

Suitable photo-initiators are disclosed in CRIVELLO, J.V., et al. VOLUME III: Photoinitiators for Free Radical Cationic. 2nd edition. Edited by BRADLEY, G.. London,UK: John Wiley and Sons Ltd, 1998. p.287-294.

Specific examples of photo-initiators may include, but are not limited to, the following compounds or combinations thereof: benzophenone and substituted benzophenones, 1-hydroxycyclohexyl phenyl ketone, thioxanthones such as isopropylthioxanthone, 2-hydroxy-2-methyl-1-phenylpropan-1-one, 2-benzyl-2-dimethylamino- (4-morpholinophenyl)

butan-1-one, benzil dimethylketal, bis (2,6- dimethylbenzoyl) -2,4, 4-trimethylpentylphosphine oxide, 2,4,6trimethylbenzoyldiphenylphosphine oxide, 2-methyl-1-[4- (methylthio) phenyl] -2-morpholinopropan-1-one, 2,2-dimethoxy-1, 2-diphenylethan-1-one or 5,7-diiodo-3-butoxy-6-fluorone.

Suitable commercial photo-initiators include Irgacure™ 184, Irgacure™ 500, Irgacure™ 907, Irgacure™ 369, Irgacure™ 1700, Irgacure™ 651, Irgacure™ 819, Irgacure™ 1000, Irgacure™ 1300, Irgacure™ 1870, Darocur™ 1173, Darocur™ 2959, Darocur™ 4265 and Darocur™ ITX available from CIBA SPECIALTY CHEMICALS, Lucerin™ TPO available from BASF AG, Esacure™ KT046, Esacure™ KIP150, Esacure™ KT37 and Esacure™ EDB available from LAMBERTI, H-Nu™ 470 and H-Nu™ 470X available from SPECTRA GROUP Ltd..

For safety reasons, in particular for food packaging applications, the photoinitiator is preferably a so-called diffusion hindered photoinitiator. A diffusion hindered photoinitiator is a photoinitiator which exhibits a much lower mobility in a cured layer of the white inkjet ink than a monofunctional photoinitiator, such as benzophenone. Several methods can be used to lower the mobility of the photoinitiator. One way is to increase the molecular weight of the photoinitiator so that the diffusion speed is reduced, e.g. polymeric photoinitiators. Another way is to increase its reactivity so that it is built into the polymerizing network, e.g. multifunctional photoinitiators (having 2, 3 or more photoinitiating groups) and polymerizable photoinitiators. The diffusion hindered photoinitiator is preferably selected from the group consisting of non-polymeric multifunctional photoinitiators, oligomeric or polymeric photoinitiators and polymerizable photoinitiators. Non-polymeric di- or multifunctional photoinitiators are considered to have a molecular weight between 300 and 900 Dalton. Non-polymerizable monofunctional photoinitiators with a molecular weight in that range are not diffusion hindered photoinitiators. Most preferably the diffusion hindered photoinitiator is a polymerizable initiator.

A suitable diffusion hindered photoinitiator may contain one or more photoinitiating functional groups derived from a Norrish type I-photoinitiator selected from the group consisting of benzoinethers, benzil ketals, $\alpha,\alpha$-dialkoxyacetophenones, $\alpha$-hydroxyalkylphenones, $\alpha$-aminoalkylphenones, acylphosphine oxides, acylphosphine sulfides, $\alpha$-haloketones, $\alpha$-halosulfones and phenylglyoxalates.

A suitable diffusion hindered photoinitiator may contain one or more photoinitiating functional groups derived from a Norrish type II-initiator selected from the group consisting of benzophenones, thioxanthones, 1,2-diketones and anthraquinones.

Suitable diffusion hindered photoinitiators are also those disclosed in EP 2065362 A (AGFA) in paragraphs [0074] and [0075] for difunctional and multifunctional photoinitiators, in paragraphs [0077] to [0080] for polymeric photoinitiators and in paragraphs [0081] to [0083] for polymerizable photoinitiators.

Other preferred polymerizable photoinitiators are those disclosed in EP 2065362 A (AGFA) and EP 2161264 A (AGFA).

A preferred amount of photoinitiator is 0 - 50 wt%, more preferably 0.1 - 20 wt%, and most preferably 0.3 - 15 wt% of the total weight of the curable pigment dispersion or ink.

In order to increase the photosensitivity further, the radiation curable ink may additionally contain co-initiators. Suitable examples of co-initiators can be categorized in three groups:

(1) tertiary aliphatic amines such as methyldiethanolamine, dimethylethanolamine, triethanolamine, triethylamine and N-methylmorpholine;

(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and

(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

The preferred co-initiators are aminobenzoates.

When one or more co-initiators are included into the radiation curable ink, preferably these co-initiators are diffusion hindered for safety reasons, in particular for food packaging applications.

A diffusion hindered co-initiator is preferably selected from the group consisting of non-polymeric di- or multifunctional co-initiators, oligomeric or polymeric co-initiators and polymerizable co-initiators. More preferably the diffusion hindered co-initiator is selected from the group consisting of polymeric co-initiators and polymerizable co-initiators. Most preferably the diffusion hindered co-initiator is a polymerizable co-initiator having at least one (meth)acrylate group, more preferably having at least one acrylate group.

Preferred diffusion hindered co-initiators are the polymerizable co-initiators disclosed in EP 2053101 A (AGFA GRAPHICS) in paragraphs [0088] and [0097].

Preferred diffusion hindered co-initiators include a polymeric co-initiator having a dendritic polymeric architecture, more preferably a hyperbranched polymeric architecture. Preferred hyperbranched polymeric co-initiators are those disclosed in US 2006014848 (AGFA) .

The radiation curable ink preferably comprises the diffusion hindered co-initiator in an amount of 0.1 to 50 wt%,

more preferably in an amount of 0.5 to 25 wt%, most preferably in an amount of 1 to 10 wt% of the total weight of the ink.

Polymerization Inhibitors

The white radiation curable inkjet ink may contain a polymerization inhibitor. Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol may also be used.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

Since excessive addition of these polymerization inhibitors will lower the ink sensitivity to curing, it is preferred that the amount capable of preventing polymerization is determined prior to blending. The amount of a polymerization inhibitor is preferably lower than 2 wt% of the total inkjet ink.

Surfactants

Surfactants are known for use in inkjet inks to reduce the surface tension of the ink in order to reduce the contact angle on the substrate, i.e. to improve the wetting of the substrate by the ink. On the other hand, the jettable ink must meet stringent performance criteria in order to be adequately jettable with high precision, reliability and during an extended period of time. To achieve both wetting of the substrate by the ink and high jetting performance, typically, the surface tension of the ink is reduced by the addition of one or more surfactants. In the case of radiation curable inkjet inks, however, the surface tension of the inkjet ink is not only determined by the amount and type of surfactant, but also by the polymerizable compounds, the polymeric dispersants and other additives in the ink composition.

The surfactant(s) can be anionic, cationic, non-ionic, or zwitter-ionic and are usually added in a total quantity less than 20 wt% based on the total weight of the inkjet ink and particularly in a total less than 10 wt% based on the total weight of the inkjet ink.

Suitable surfactants include fluorinated surfactants, fatty acid salts, ester salts of a higher alcohol, alkylbenzene sulphonate salts, sulphosuccinate ester salts and phosphate ester salts of a higher alcohol (for example, sodium dodecylbenzenesulphonate and sodium dioctylsulphosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL™ 104, 104H, 440, 465 and TG available from AIR PRODUCTS & CHEMICALS INC.).

Preferred surfactants include fluoro surfactants (such as fluorinated hydrocarbons) and silicone surfactants. The silicones are typically siloxanes and can be alkoxylated, polyether modified, polyester modified, polyether modified hydroxy functional, amine modified, epoxy modified and other modifications or combinations thereof. Preferred siloxanes are polymeric, for example polydimethylsiloxanes.

The fluorinated or silicone compound used as a surfactant may be a polymerizable surfactant. Suitable copolymerizable compounds having surface-active effects include, for example, polyacrylate copolymers, silicone modified acrylates, silicone modified methacrylates, acrylated siloxanes, polyether modified acrylic modified siloxanes, fluorinated acrylates, and fluorinated methacrylate. These acrylates can be mono-, di-, tri- or higher functional (meth)acrylates.

Depending upon the application a surfactant can be used with a high, low or intermediate dynamic surface tension. Silicone surfactants are generally known to have low dynamic surface tensions while fluorinated surfactants are known to have higher dynamic surface tensions.

Silicone surfactants are often preferred in curable inkjet inks, especially the reactive silicone surfactants, which are able to be polymerized together with the polymerizable compounds during the curing step.

Examples of useful commercial silicone surfactants are those supplied by BYK CHEMIE GMBH (including Byk™-302, 307, 310, 331, 333, 341, 345, 346, 347, 348, UV3500, UV3510 and UV3530), those supplied by TEGO CHEMIE SERVICE (including Tego™ Rad 2100, 2200N, 2250, 2300, 2500, 2600 and 2700), Ebecryl™ 1360 a polysilixone hexaacrylate from CYTEC INDUSTRIES BV and Efka™-3000 series (including Efka™-3232 and Efka™-3883) from EFKA CHEMICALS B.V..

Ink containers

The white inkjet ink according to the present invention is preferably stored in a sealed ink container having an internal volume of 0.1 L to 32.0 L containing preferably a head space between 3 % and 25 % of the internal volume of the sealed ink container.

The internal volume of the sealed ink container should be between 0.1 L and 32.0 L, preferably between 0.2 L and 26 L, more preferably between 0.5 L and 11 L and most preferably between 1.0 L and 6.0 L. Ink containers smaller than 0.1 L are less desirable in an industrial inkjet printing environment, because the frequent replacing of the ink containers leads to an uneconomical production process. Ink containers larger than 32.0 L become too heavy to handle for an average sized person, especially since the ink container has to be shaken before use.

The ink container is preferably manufactured from an opaque material. This has the advantage that, for example, incident light is prevented from polymerizing a white UV radiation curable inkjet ink including one or more photoinitiators.

The ink container may have any desirable shape, such as an ink bottle, a jerry can and an ink bag. It may include one or more handles (38) as in Fig.3 for facilitating its handling.

The ink container is sealed to prevent any possible spillage during handling. The sealing can be made from materials well-known to those skilled in the art, such as aluminium foil, plastic foils or combinations thereof. Sealing of an ink bag may be performed by well-known techniques such as heat welding as disclosed by US 6289654 (SEIKO EPSON).

In a preferred embodiment, the ink container is not a heat bag but an ink container made from a more rigid material, such as a bottle or jerry-can. The advantage of a rigid material is that it is less susceptible to damage compared to the flexible materials used for ink bags. For this reason, ink bags are usually transported in a second packaging of e.g. cardboard or plastic to prevent such damage from occurring.

In a preferred embodiment, as shown in Fig.2, the ink container is closed first by a sealing (23) and then by a screw cap (12). The screw cap, usually made of plastic, protects undesired perforation of the sealing during transport. The sealing also protects undesired polymerization of a radiation curable inkjet ink which may be initiated by gaseous chemicals during transport to the customer.

In another embodiment the sealing and screw cap are integrated into a single component for hermetically closing the ink container. Ink containers closed by a plug are less preferred because more force is required to open the ink container.

The ink container may be provided by a label containing information such as e.g. safety information and the manufacturer's address. Alternatively this information may be printed partly or wholly directly on the ink container.

The headspace, usually filled by air, above the ink surface should be at least 3 %, preferably at least 4% to 10% of the total internal volume of the ink container. Today, ink manufacturers minimize the headspace in order to decrease the transport cost of ink. Ink bags are even often sealed under vacuum, thereby reducing the headspace to 0 %.

A head space of less than 3 % was found to impede the shaking of the ink because there is no enough room for the ink to move around. The head space is preferably also not more than about 25 %, since shaking of the ink then introduces a significant amount of air bubbles that are stabilized by the ink and are removed less efficiently by a degassing unit in the inkjet printer before printing. The headspace is preferably between 5 % and 8 % of the total internal volume of the ink container.

<u>Inkjet ink sets</u>

The white inkjet ink may be part of an inkjet ink set including one or more colour inkjet inks, preferably pigmented colour inkjet inks.

The inkjet ink set preferably comprises at least one yellow curable ink (Y), at least one cyan curable ink (C) and at least one magenta curable ink (M) and preferably also at least one black curable ink (K). The curable CMYK-ink set may also be extended with extra inks such as red, green, blue, and/or orange to further enlarge the color gamut of the image. The CMYK-ink set may also be extended by the combination of the full density inkjet inks with light density inkjet inks. The combination of dark and light color inks and/or black and grey inks improves the image quality by a lowered graininess.

The pigmented colour inks preferably contain a dispersant, more preferably a polymeric dispersant, for dispersing the pigment. The pigmented inkjet ink may contain a dispersion synergist to improve the dispersion quality and stability of the ink. A mixture of dispersion synergists may be used to further improve dispersion stability.

<u>Inkjet printing methods</u>

White inkjet inks can be advantageously used in an inkjet printing method , for example, on transparent substrates to enhance the contrast and the vividness of colour inks. White inkjet inks are then either used for so-called "surface printing" or "backing printing" to form a reflection image on a transparent substrate. In surface printing, a white background is formed on a transparent substrate using a white ink and further thereon, a color image is printed, where after the formed final image is viewed from the printed face.

In so-called backing printing, a color image is formed on a transparent substrate using color inks and then a white ink is applied onto the color inks, and the final formed image is observed through the transparent substrate. In a

preferred embodiment a radiation curable colour inkjet ink is jetted on partially cured radiation curable white inkjet ink. If the white ink is only partially cured, an improved wettability and adhesion of the colour ink on the white ink layer is observed.

Partially curing immobilizes the ink on the substrate surface. A quick test to verify that the white inkjet ink is partially cured can be done by rubbing a finger or a cloth across the printed surface, whereby it is observed that ink can be smeared or smudged on the surface.

White inkjet ink can also be used as a spot colour. It can be used, for example, to print white text on a black or coloured background.

## Inkjet Printing Devices

The white inkjet ink according to the present invention may be jetted by one or more print heads ejecting small droplets of ink in a controlled manner through nozzles onto an ink-receiver surface, which is moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of ink from the print head. However the inkjet printing method according to the present invention is not restricted to piezoelectric inkjet printing. Other inkjet print heads can be used and include various types, such as a continuous type and thermal, electrostatic and acoustic drop on demand type.

The inkjet print head normally scans back and forth in a transversal direction across the moving ink-receiver surface. Often the inkjet print head does not print on the way back. Bi-directional printing is preferred for obtaining a high areal throughput. Another preferred printing method is by a "single pass printing process", which can be performed by using page wide inkjet print heads or multiple staggered inkjet print heads which cover the entire width of the ink-receiver surface. In a single pass printing process the inkjet print heads usually remain stationary and the ink-receiver surface is transported under the inkjet print heads.

## Curing Devices

The white radiation curable inkjet ink according to the present invention can be cured by exposing it to actinic radiation, preferably by ultraviolet radiation.

In inkjet printing, the curing means may be arranged in combination with the print head of the inkjet printer, travelling therewith so that the curable ink is exposed to curing radiation very shortly after been jetted.

In such an arrangement, it can be difficult to provide a small enough radiation source connected to and travelling with the print head. Therefore, a static fixed radiation source may be employed, e.g. a source of curing UV-light, connected to the radiation source by means of flexible radiation conductive means such as a fiber optic bundle or an internally reflective flexible tube.

Alternatively, the actinic radiation may be supplied from a fixed source to the radiation head by an arrangement of mirrors including a mirror upon the radiation head.

The source of radiation arranged not to move with the print head, may also be an elongated radiation source extending transversely across the ink-receiver surface to be cured and adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:

- UV-A: 400 nm to 320 nm
- UV-B: 320 nm to 290 nm
- UV-C: 290 nm to 100 nm.

Furthermore, it is possible to cure the image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high

in both UV-A and UV-B. The use of two UV-sources has been found to have advantages e.g. a fast curing speed and a high curing degree.

For facilitating curing, the inkjet printer often includes one or more oxygen depletion units. The oxygen depletion units place a blanket of nitrogen or other relatively inert gas (e.g. $CO_2$), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

Method of Manufacturing Inkjet Inks

The method of manufacturing a white inkjet ink having a liquid ink vehicle according to the present invention includes the steps of:

a) dispersing a first inorganic pigment with a refractive index greater than 1.60 having an average particle size A larger than 200 nm as measured by transmission electron microscopy at a 13,500x magnification on a 10 μm thick coated layer of the white inkjet ink for particles having a particle size larger than or equal to 100 nm; and
b) dispersing a second inorganic pigment having an average particle size B between 40 nm and 90 nm as measured by transmission electron microscopy at a 58,000x magnification on a 10 μm thick coated layer of the white inkjet ink for particles having a particle size smaller than 100 nm;
c) preparing a white inkjet ink including at least 8.0 wt% of the first inorganic pigment and 1.0 wt% to 4.0 wt% of the second inorganic pigment both based on the total weight of the white inkjet ink.

The white inkjet ink is preferably prepared by mixing two pigment dispersions, i.e. a dispersion of the first inorganic pigment and a dispersion of the second inorganic pigment.

In a preferred embodiment, the method of manufacturing a white inkjet ink according to the present invention including further a step d) of filling and sealing an ink container having an internal volume of 0.1 L to 32.0 L with the white inkjet ink such that the ink container includes a headspace between 3 % and 25 % of the internal volume of the sealed ink container.

The first and/or second inorganic pigment in the method of manufacturing a white inkjet ink according to the present invention is preferably a pigment mainly composed of titanium dioxide.

The liquid ink vehicle employed in the method of manufacturing a white inkjet ink according to the present invention is preferably a non-aqueous ink vehicle, more preferably the white inkjet ink is curable by UV radiation or electron beam radiation.

In another embodiment, the white inkjet ink is used to manufacture an opaque colour inkjet ink by blending the white inkjet ink with an organic colour pigment dispersion. The opaqueness of a colour inkjet ink is desired in certain applications and can easily be tested by coating a transparency with the colour inkjet ink and projecting it with an overhead projector, if the colour of the colour inkjet is clearly visible then it is a transparent colour inkjet ink. If upon projection only a dark shadow is visible and practically no colour, then the colour inkjet ink is an opaque colour inkjet ink.

An opaque colour inkjet is usually prepared by including a white pigment into the colour inkjet ink, but suffers from the same problems of sedimentation and redispersibility by shaking exhibited by a white inkjet ink. The mixture of the first and second inorganic pigments as in the white inkjet ink of the present invention also results in a colour inkjet ink having improved redispersibility.

The pigment dispersions of the first and second inorganic pigments are preferably prepared by milling the pigment in (part of) the ink vehicle in the presence of the dispersant.

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy.

Many different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium beads.

In the process of mixing, milling and dispersion, each process is performed with cooling to prevent build up of heat, and as much as possible under light conditions in which actinic radiation has been substantially excluded if radiation curable pigment dispersions are prepared.

The dispersion process can be carried out in a continuous, batch or semi-batch mode.The milling time can vary widely and depends upon the pigment, the selected mechanical means and residence conditions, the initial and desired final particle size, etc.

After milling is completed, the milling media is usually separated from the milled particulate product using conventional separation techniques, such as by filtration, sieving through a mesh screen, and the like. Often the sieve

is built into the mill, e.g. for a bead mill. The milled pigment concentrate is preferably separated from the milling media by filtration.

In general it is desirable to make the inkjet ink in the form of a concentrated mill grind, which is subsequently diluted to the appropriate concentration for use in the inkjet printing system. This technique permits preparation of a greater quantity of pigmented ink from the equipment. By dilution, the inkjet ink is adjusted to the desired viscosity, surface tension, colour, hue, saturation density, and print area coverage for the particular application.

## EXAMPLES

Materials

All materials used in the following examples were readily available from standard sources such as Aldrich Chemical Co. (Belgium) and Acros (Belgium) unless otherwise specified.

TR52 is TIOXIDE TR 52™, a surface modified titanium dioxide from HUNTSMAN CHEMICAL GROUP.
RM300 is Hombitech™ RM300, a titanium dioxide having a specific surface of 70 $m^2/g$ available from SACHTLEBEN CHEMIE GmbH, a company of ROCKWOOD SPECIALTIES GROUP.

DB162 is an abbreviation used for the polymeric dispersant Disperbyk™ 162 available from BYK CHEMIE GMBH whereof the solvent mixture of 2-methoxy-1-methylethylacetate, xylene and n-butylacetate was removed.

INHIB is a mixture forming a polymerization inhibitor having a composition according to Table 2.

**Table 2**

| Component | wt% |
|---|---|
| VEEA | 82.4 |
| p-methoxyphenol | 4.0 |
| 2,6-di-tert-butyl-4-methylphenol | 10.0 |
| Cupferron™ AL | 3.6 |

INHIB2 is identical to INHIB with the exception that the monomer VEEA was replaced by PEA.

Cupferron™ AL is aluminum N-nitrosophenylhydroxylamine from WAKO CHEMICALS LTD.

VEEA is 2-(vinylethoxy)ethyl acrylate, a difunctional monomer available from NIPPON SHOKUBAI, Japan.
TMPTA is trimethylolpropane triacrylate available as Sartomer™ SR351 from SARTOMER.
PEA is 2-phenoxyethyl acrylate available as Sartomer™ SR339C from SARTOMER.
VCL is N-vinyl caprolactam available from BASF BELGIUM, NV. TBCH is 4-tert.butylcyclohexylacrylate available under the trade name of Laromer™ TBCH from BASF.
G1122 is a monofunctional urethane acrylate having a $T_g$ of -3°C and available as Genomer™ 1122 from RAHN having the Formula (II):

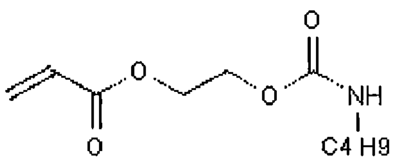

Formula (II).

KTO46 is Esacure™ KTO46 is a mixture of trimethylbenzoyldiphenylphosphine oxide, alfa-hydroxyketone en benzophenone derivatives available from FRATELLI LAMBERTI SPA. TPO is an abbreviation used for 2,4,6-trimethylbenzoyl-diphenyl-phosphineoxide available under the trade name Darocur™ TPO from CIBA SPECIALTY CHEMICALS.

Tego™ Rad 2200 N is a crosslinkable silicone polyether acrylate from EVONIK.
Tego™ Glide 410 is a polysiloxan polyether copolymer from EVONIK.

PET100 is a 100 μm unsubbed PET substrate with on the backside an antiblocking layer with antistatic properties available from AGFA-GEVAERT as P100C PLAIN/ABAS.

Measurement Methods

1. Redispersibility test

The transmission at 880 nm of an ink sample was measured while being submitted to a centrifugal force using LUMiSizer™ Dispersion Analyzer from L.U.M. GmbH. Accelerated sedimentation was possible by employing a centrifugal force (1,200 G). After sedimentation, the ink sample was reproducibly mechanically shaken for 60 seconds and the transmission at 880 nm was measured again. The fraction of sediment which could not be redispersed caused a higher transmission value being measured. A volume fraction of non-redispersible particles can be calculated from this measured transmission value. A software tool SEPview™ available from L.U.M. GmbH allows recording and evaluation of the transmission profiles as a function of time for 12 ink samples which can be measured simultaneously on the LUMiSizer™ Dispersion Analyzer.

The sample preparation and evaluation will now be discussed in more detail. Each ink sample was analyzed in tri-fold by adding 1.4 g of ink to a glass cuvette which was closed by cap. The ink in the glass cuvette was mixed for two seconds using a VF2 vortexer from Janke & Kunkel at its highest setting. The transmission of the ink samples were measured for 2 hours (250 transmission profiles of 30 seconds) at 3000 rpm, which roughly corresponds with 100 days unstirred storage at 1G.

After this first measurement run, the glass containers are mechanically shaken for 1 minute using a Griffin™ flask shaker and then after this redispersing treatment measured for a second time in the same manner.

The transmission profiles are recorded every 30 seconds over the full length of the ink container. Transmission is followed from the start of sedimentation (meniscus) in a window of 10 mm (111.7 mm to 121.7 mm). The SEPview™ software tool provides a % mean value of transmission which is indicative for sedimentation. The transmission of the 2$^{nd}$ run $T_2$ is higher than the transmission of the 1$^{st}$ run $T_1$ because part of the sediment could no be redispersed.

The equation (1) can be derived for the difference in transmission before and after mechanical shaking:

$$\ln (T_2 / T_1) = 3Qr (ø_1 - ø_2) / d \qquad \text{equation (1),}$$

wherein:

- $T_1$ is the transmission value before mechanical shaking;
- $T_2$ is the transmission value after mechanical shaking;
- Q represents the scatter-efficiency;
- r is the diameter of the cuvette;
- d represents the particle diameter;
- $ø_1$ represents the volumetric fraction of particles before shaking; and
- $ø_2$ represents the volumetric fraction of particles after shaking.

The value of 3.Q.r / d is a constant and if arbitrarily set to a value of 1, then equation (2) becomes:

$$ø_2 = - \ln (T_2 / T_1) + ø_1 \qquad \text{equation (2).}$$

Assuming a transmission of 100 % at a volumetric fraction of 0 ($ø_2 = 0$ at $T_2 = 100$), then the equation (3) is valid:

$$ø_1 = \ln (100 / T_1) \qquad \text{equation (3).}$$

Combination of equations (2) and (3) results in equation (4):

$$ø_2 = ( \ln (100/T_1) - \ln (T_2/T_1) \qquad \text{equation (4).}$$

The percentage sediment that could not be redispersed (%NRS) is then given by equation (5):

$$\%NRS = \ln (T_2/T_1) / \ln (100/T_1) \times 100\ \% \qquad \text{equation (5).}$$

The smaller the percentage value, the more sediment could be redispersed. For a good redispersibility, the %NRS value should be less then 5%, preferably even less then 2%.

2. Viscosity

The viscosity of the formulations was measured at 45°C using a "Robotic Viscometer Type VISCObot" from CAMBRIDGE APPLIED SYSTEMS.

For inkjet printing, a viscosity of less than 20 mPa.s at 45°C is preferred, more preferably the viscosity was less than 15 mPa.s.

Example 1

This example illustrates how the average particle sizes A and B and the number of particles per $mm^3$ $N_{AB}$ of a white inkjet ink according tot the present invention are determined by transmission electron microscopy (TEM).

Preparation of Pigment Dispersions

A concentrated white pigment dispersion W1 was prepared having a composition according to Table 3.

**Table 3**

| wt% of : | W1 |
|---|---|
| TR52 | 50.0 |
| DB162 | 10.0 |
| INHIB | 1.0 |
| VEEA | 39.0 |

The concentrated pigment dispersion W1 was made by mixing 3.1 kg of VEEA, 28.5 kg of the white pigment TR52, 0.380 kg of the inhibitor INHIB and 19.0 kg of a 30% solution of the polymeric dispersant DB162 in VEEA for 30 minutes in a 60 L vessel equipped with a DISPERLUX™ disperser (from DISPERLUX S.A.R.L., Luxembourg). This mixture was subsequently milled in a DYNO™-MILL KD 6 from the company WAB Willy A. Bachofen (Switzerland) using 0.65mm yttrium-stabilized zirconium oxide-beads. The bead mill was filled for 52% with the grinding beads and operated in recirculation mode for 1 hour by using a tip speed of 14.7 m/s. The milling chamber is water-cooled during the operation.

A concentrated pigment dispersion W2 was prepared having a composition according to Table 4.

**Table 4**

| wt% of : | W2 |
|---|---|
| RM300 | 50.0 |
| DB162 | 10.0 |
| INHIB | 1.0 |
| VEEA | 39.0 |

The concentrated pigment dispersion W2 was made by mixing 3.6 kg of VEEA, 3.0 kg of the pigment RM300, 67 g of the inhibitor INHIB and 3,333 g of a 30% solution of the polymeric dispersant DB162 in VEEA in a vessel of 15 L using a DISPERLUX™ disperser (from DISPERLUX S.A.R.L., Luxembourg). The vessel was then connected to a Bachofen DYNO™-MILL ECM Pilot mill having an internal volume of 1.5 L filled for 42% with 0.4 mm yttrium stabilized zirconia beads ("high wear resistant zirconia grinding media" from TOSOH Co.). The mixture was circulated over the mill for 4 hours and 35 minutes at a flow rate of about 1.5 L per minute and a tip speed in the mill of about 13 m/s.

Preparation of Coated layer of White Inkjet Ink

A radiation curable white inkjet ink was prepared by combining the concentrated pigment dispersions W1 and W2 with the components according to Table 5.

Table 5

| Component | wt% of the components |
|---|---|
| **W1** | 35.0 |
| **W2** | 6.7 |
| **TMPTA** | 31.0 |
| **VEEA** | 18.8 |
| **TPO** | 2.9 |
| **KTO46** | 4.0 |
| **INHIB** | 0.6 |
| **Tego™ Rad 2200 N** | 1.0 |

The radiation curable white inkjet ink had a viscosity of 13 mPa.s at 45°C and was coated on a PET100 substrate using a bar coater and a 10 μm wired bar. The coated sample CS1 was fully cured using a Fusion DRSE-120 conveyer, equipped with a Fusion VPS/I600 lamp (D-bulb), which transported the sample under the UV-lamp on a conveyer belt at a speed of 20 m/min.

Analysis and Evaluation

TEM foils with a thickness of 100 nm were cut by ultramicrotomy from the coated sample CS1 in a direction perpendicular on the support. The TEM-foils were positioned on a TEM-grid and TEM-images, such as in Figure 4, were recorded at 80 kV. The Image-Pro™ Plus software tool from MediaCybernetics counted the number of particles and determined their particle size. The particle size was calculated from the TEM-image as a particle diameter of a spherical particle having the same cross section surface area. The particle size was calculated from the surface area of a particle in the TEM-image using the Diameter(mean) selection in the Image-Pro™ Plus software tool.

Measurement by transmission electron microscopy at a 13,500x magnification on a 10 μm thick coated layer of the white inkjet ink delivered the measurement data shown in Table 6. All particles having a size of 100 nm or less were ignored to prevent double counting when measuring the coated layer at the higher magnification of 58,000x .

Five TEM images were taken haven a total measurement area of 147.2 $\mu m^2$. The measurement area of a TEM image (41) as shown in Figure 4 is determined by surface area of the coated ink layer (42) thereby ignoring the "air"-corner (43) and the "support"-corner (44). The 2 μm scale bar (47) was added to Figure 4 after the measurement. It can be seen that the first inorganic pigments (45) are clearly much larger than the second inorganic pigments (46), making a higher magnification of 58,000x necessary for accurately measuring the particles having a particle size of no more than 100 nm.

Table 6

| | Particle Size (in nm) | | | | | | | |
|---|---|---|---|---|---|---|---|---|
| **Row 1** | 110 | 112 | 113 | 118 | 119 | 120 | 120 | 124 |
| **Row 2** | 125 | 130 | 135 | 140 | 143 | 143 | 143 | 146 |
| **Row 3** | 147 | 149 | 153 | 158 | 158 | 158 | 160 | 162 |
| **Row 4** | 164 | 165 | 167 | 167 | 170 | 172 | 172 | 175 |
| **Row 5** | 176 | 176 | 176 | 177 | 179 | 180 | 181 | 182 |
| **Row 6** | 182 | 183 | 183 | 184 | 184 | 185 | 186 | 188 |
| **Row 7** | 189 | 190 | 193 | 195 | 199 | 200 | 200 | 200 |
| **Row 8** | 201 | 202 | 202 | 202 | 203 | 204 | 205 | 206 |
| **Row 9** | 206 | 207 | 208 | 208 | 208 | 211 | 212 | 214 |
| **Row 10** | 214 | 216 | 217 | 218 | 219 | 219 | 220 | 220 |

(continued)

| | Particle Size (in nm) | | | | | | | |
|---|---|---|---|---|---|---|---|---|
| **Row 11** | 222 | 223 | 223 | 223 | 225 | 225 | 226 | 226 |
| **Row 12** | 226 | 227 | 229 | 230 | 230 | 232 | 232 | 233 |
| **Row 13** | 234 | 234 | 235 | 236 | 237 | 238 | 238 | 239 |
| **Row 14** | 239 | 239 | 243 | 243 | 244 | 245 | 248 | 248 |
| **Row 15** | 248 | 249 | 250 | 250 | 250 | 251 | 252 | 252 |
| **Row 16** | 252 | 253 | 253 | 254 | 255 | 255 | 257 | 258 |
| **Row 17** | 258 | 258 | 263 | 264 | 265 | 267 | 270 | 271 |
| **Row 18** | 276 | 281 | 284 | 285 | 286 | 289 | 290 | 291 |
| **Row 19** | 293 | 294 | 294 | 295 | 297 | 299 | 304 | 306 |
| **Row 20** | 309 | 314 | 315 | 319 | 326 | 329 | 333 | 339 |
| **Row 21** | 347 | 362 | 380 | | | | | |

Table 6 shows that there were 163 particles larger than 100 nm measured in the total measurement area of 147.2 $\mu m^2$ and the average particle size A was 222 nm. For an area of 100 $\mu m^2$, there would be 111 particles. Since the TEM foils had a thickness of 100 nm, this means 11,073 particles per $mm^3$. Here, the number $N_A$ represents the number of particles per $mm^3$ having a particle size the range of 202 nm to 242 nm. There are 49 particles in rows 8 to 14 of Table 6 , including the correction for the total measurement area of 147.2 $\mu m^2$, this amounts to a value for $N_A$ of 3,328 particles per $mm^3$.

The same procedure was repeated for the particles having a particle size of no more than 100 nm except that 13 TEM images were measured at a magnification of 58,000x. In the total measurement area of 21.7 $\mu m^3$, there were 236 particles present having a particle size of no more than 100 nm and the average particle size B was found to be 55 nm. The value of $N_B$ representing the number of particles per $mm^3$ having a particle size in the range of 35 nm to 75 nm was found to be 83,871 particles per $mm^3$.

For this white inkjet ink, the value of $N_{AB}$ was calculated to be 16,707 particles per $mm^3$.

Example 2

This example illustrates how the redispersibility of white inkjet inks can be improved by adding to the white inorganic pigment of the ink, a second inorganic pigment of a specific size in a certain amount.

Preparation of White Inkjet Inks

The same concentrated dispersions W1 and W2 of Example 1 were used to prepare the comparative white inkjets C-1 to C-7 according to Table 7 and the inventive white inkjets I-1 to I-7 according to Table 8.

**Table 7**

| wt% of component | C-1 | C-2 | C-3 | C-4 | C-5 | C-6 | C-7 |
|---|---|---|---|---|---|---|---|
| **W1** | 23.00 | 23.00 | 23.00 | 23.00 | 35.00 | 35.00 | 35.00 |
| **W2** | --- | 0.33 | 0.84 | 1.67 | --- | 0.33 | 0.84 |
| **TMPTA** | 51.00 | 50.00 | 49.50 | 48.50 | 39.00 | 38.00 | 37.50 |
| **VEEA** | 17.28 | 17.95 | 17.95 | 18.13 | 17.40 | 18.07 | 18.07 |
| **INHIB** | 0.77 | 0.77 | 0.76 | 0.75 | 0.65 | 0.65 | 0.64 |
| **Tego™ Rad 2200N** | 1.00 | 1.00 | 1.00 | 1.00 | 1.00 | 1.00 | 1.00 |
| **TPO** | 2.95 | 2.95 | 2.95 | 2.95 | 2.95 | 2.95 | 2.95 |
| **KTO46** | 4.00 | 4.00 | 4.00 | 4.00 | 4.00 | 4.00 | 4.00 |

**Table 8**

| wt% of component | I-1 | I-2 | I-3 | I-4 | I-5 | I-6 | I-7 |
|---|---|---|---|---|---|---|---|
| **W1** | 23.00 | 23.00 | 23.00 | 35.00 | 35.00 | 35.00 | 35.00 |
| **W2** | 3.33 | 8.33 | 13.33 | 1.67 | 3.33 | 8.33 | 13.33 |
| **TMPTA** | 47.00 | 42.00 | 37.00 | 36.50 | 35.00 | 30.00 | 25.00 |
| **VEEA** | 17.98 | 18.03 | 18.08 | 18.25 | 18.10 | 18.15 | 18.20 |
| **INHIB** | 0.74 | 0.69 | 0.64 | 0.63 | 0.62 | 0.57 | 0.52 |
| **Tego™ Rad 2200N** | 1.00 | 1.00 | 1.00 | 1.00 | 1.00 | 1.00 | 1.00 |
| **TPO** | 2.95 | 2.95 | 2.95 | 2.95 | 2.95 | 2.95 | 2.95 |
| **KTO46** | 4.00 | 4.00 | 4.00 | 4.00 | 4.00 | 4.00 | 4.00 |

Evaluation

The radiation curable white inkjet inks C-1 to C-7 and I-1 to I-7 were coated on a PET100 substrate using a bar coater and a 10 μm wired bar. The coated samples was fully cured using a Fusion DRSE-120 conveyer, equipped with a Fusion VPS/I600 lamp (D-bulb), which transported the samples under the UV-lamp on a conveyer belt at a speed of 20 m/min.

The viscosity at 45°C and the redispersibility (%NRS) of the white inkjet inks C-1 to C-7 and I-1 to I-7 were measured. The calculated values for $N_{AB}$ using the TEM method of Example 1 are also given in Table 9. The wt% of the first and second inorganic pigment in Table 9 is the wt% of the pigment TR52 respectively the pigment RM300 as based on the total weight of the ink.

**Table 9**

| Coated Sample of ink | wt% First Inorganic Pigment | wt% Second Inorganic Pigment | $N_{AB}$ (particles /mm$^3$) | Viscosity (mPa.s) | %NRS |
|---|---|---|---|---|---|
| C-1 | 11.50 | - | 924 | 13.7 | 9.1 |
| C-2 | 11.50 | 0.10 | 3028 | 13.2 | 11.8 |
| C-3 | 11.50 | 0.25 | 4788 | 13.5 | 7.3 |
| C-4 | 11.50 | 0.50 | 6727 | 13.0 | 7.5 |
| I-1 | 11.50 | 1.00 | 9577 | 13.0 | 1.5 |
| I-2 | 11.50 | 2.50 | 15142 | 12.1 | 1.9 |
| I-3 | 11.50 | 4.00 | 19153 | 13.3 | 1.7 |
| C-5 | 17.50 | - | 1407 | 14.2 | 8.9 |
| C-6 | 17.50 | 0.10 | 3736 | 11.7 | 8.9 |
| C-7 | 17.50 | 0.25 | 5907 | 13.3 | 6.9 |
| I-4 | 17.50 | 0.50 | 8353 | 12.5 | 4.2 |
| I-5 | 17.50 | 1.00 | 11814 | 13.5 | 3.9 |
| I-6 | 17.50 | 2.50 | 18679 | 13.6 | 4.1 |
| I-7 | 17.50 | 4.00 | 23627 | 13.9 | 2.3 |

From the %NRS-values in Table 9, it can be seen that a sufficient number of small, transparent and large, white pigment particles must be present in the ink in order to obtain good redispersibility, i.e. a value for $N_{AB}$ larger than 7,500

particles / $mm^3$.

Example 3

This example illustrates how the addition of the second inorganic pigment improves the redispersibility of a white inkjet ink after storage.

Preparation of White Inkjet inks

A concentrated white pigment dispersion W3 was prepared having a composition according to Table 10.

**Table 10**

| wt% of : | W3 |
|---|---|
| TR52 | 30.0 |
| DB162 | 10.0 |
| INHIB2 | 2.0 |
| PEA | 58.0 |

The concentrated pigment dispersion W3 was made by mixing 15.75 kg of PEA, 13.50 kg of the white pigment TR52, 0.750 kg of the inhibitor INHIB2 and 15.00 kg of a 30% solution of the polymeric dispersant DB162 in PEA for 30 minutes in a 60 L vessel equipped with a DISPERLUX™ disperser (from DISPERLUX S.A.R.L., Luxembourg). This mixture was subsequently milled in a DYNO™-MILL KD 6 from the company WAB Willy A. Bachofen (Switzerland) filled with 0.4mm yttrium-stabilized zirconium oxide-beads. The bead mill was filled for 52% with the grinding beads and operated in recirculation mode for 1 hour by using a tip speed of 12 m/s. The milling chamber is water-cooled during the operation.

The same concentrated dispersions W2 of Example 1 was used in the preparation of the comparative white inkjets C-8 and the inventive white inkjets I-8 according to Table 11.

**Table 11**

| wt% of component | C-8 | I-8 |
|---|---|---|
| W3 | 43.33 | 43.33 |
| W2 | --- | 3.33 |
| PEA | 13.29 | 13.29 |
| VCL | 20.00 | 20.00 |
| TBCH | 10.00 | 10.00 |
| G1122 | 6.00 | 2.70 |
| Tego™ Glide 410 | 1.00 | 0.30 |
| INHIB2 | 0.13 | 0.10 |
| TPO | 2.95 | 2.95 |
| KTO46 | 4.00 | 4.00 |

Evaluation

Two black colored plastic ink bottles B-1 and B-2 were filled with about 1 L of the inkjet ink C-8 respectively inkjet ink I-8, sealed and then kept without any agitation for 1 month of storage.

After 31 days, both bottles were shaken by hand for 5 minutes. The percentage sediment which could not be redispersed was determined. The results are shown in Table 15.

**Table 15**

| | B-1 | B-2 |
|---|---|---|
| **Weight of inkjet ink (g)** | 1119 | 1114 |
| **$TiO_2$ content (g)** | 145 | 156 |
| **Weight of non-redispersed sediment (g)** | 9.9 | 4.1 |
| **wt% non-redispersable sediment** | 6.8% | 2.6% |

From Table 15, it should be clear that the addition of the small RM300 particles improves the redispersibility.

To avoid possible irreproducibility effects by manual shaking, the experiment was repeated except that shaking was replaced by stirring for 2 hours with a 2 cm magnet added to the bottle. The comparative inkjet ink C-8 was found to have 4.8 % of non-redispersible sediment, while the inventive inkjet ink I-8 only contained 2.0 % of non-redispersible sediment

## Claims

**1.** A white inkjet ink including

a) a liquid ink vehicle;
b) a first inorganic pigment with a refractive index greater than 1.60 having an average particle size A larger than 200 nm ; and
c) a second inorganic pigment having an average particle size B between 40 nm and 90 nm;
wherein the number of particles per $mm^3$ $N_{AB}$ complies with the relation:

$$N_{AB} = \sqrt{N_A \times N_B} \geq 7{,}500\, particles / mm^3$$

with

$N_A$ representing the number of particles per $mm^3$ having a particle size in the range of A - 20 nm to A + 20 nm;
$N_B$ representing the number of particles per $mm^3$ having a particle size in the range of B - 20 nm to B + 20 nm; and

wherein

the average particle size A is measured by transmission electron microscopy at a 13,500x magnification on a 10 μm thick coated layer of the white inkjet ink for all inorganic particles having a particle size larger than 100 nm;
the average particle size B is measured by transmission electron microscopy at a 58,000x magnification on the same 10 μm thick coated layer of the white inkjet ink for all inorganic particles having a particle size of no more than 100 nm.

**2.** The white inkjet ink according to claim 1 wherein the first inorganic pigment with a refractive index greater than 1.60 is a pigment mainly composed of titanium dioxide.

**3.** The white inkjet ink according to claim 1 or 2 wherein the second inorganic pigment is a pigment mainly composed of titanium dioxide.

**4.** The white inkjet ink according to any one of claims 1 to 3 wherein the liquid ink vehicle is a non-aqueous ink vehicle.

**5.** The white inkjet ink according to any one of claims 1 to 4 wherein white inkjet ink is curable by UV radiation or electron beam radiation.

6. The white inkjet ink according to any one of claims 1 to 5 including up to 4.0 wt% of the second inorganic pigment based on the total weight of the white inkjet ink.

7. The white inkjet ink according to any one of claims 1 to 6 including at least 8.0 wt% of the first inorganic pigment based on the total weight of the white inkjet ink.

8. A sealed ink container having an internal volume of 0.1 L to 32.0 L containing a head space and a white inkjet ink according to any one of claims 1 to 7, wherein the head space is between 3 % and 25 % of the internal volume of the sealed ink container.

9. The sealed ink container of claim 8 wherein the ink container is manufactured from an opaque material.

10. A method of manufacturing a white inkjet ink having a liquid ink vehicle comprising the steps of:

a) dispersing a first inorganic pigment with a refractive index greater than 1.60 having an average particle size A larger than 200 nm as measured by transmission electron microscopy at a 13,500x magnification on a 10 μm thick coated layer of the white inkjet ink for particles having a particle size larger than or equal to 100 nm; and
b) dispersing a second inorganic pigment having an average particle size B between 40 nm and 90 nm as measured by transmission electron microscopy at a 58,000x magnification on a 10 μm thick coated layer of the white inkjet ink for particles having a particle size smaller than 100 nm;
c) preparing a white inkjet ink including at least 8.0 wt% of the first inorganic pigment and 1.0 wt% to 4.0 wt% of the second inorganic pigment both based on the total weight of the white inkjet ink.

11. The method according to claim 10 further including the step d) of filling and sealing an ink container having an internal volume of 0.1 L to 32.0 L with the white inkjet ink such that the ink container includes a headspace between 3 % and 25 % of the internal volume of the sealed ink container.

12. The method according to claim 10 or 11 wherein the first inorganic pigment with a refractive index greater than 1.60 is a pigment mainly composed of titanium dioxide.

13. The method according to any one of claims 10 to 12 wherein the second inorganic pigment is a pigment mainly composed of titanium dioxide.

14. The method according to any one of claims 10 to 13 wherein the liquid ink vehicle is a non-aqueous ink vehicle.

15. The method according to any one of claims 10 to 14 wherein white inkjet ink is curable by UV radiation or electron beam radiation.

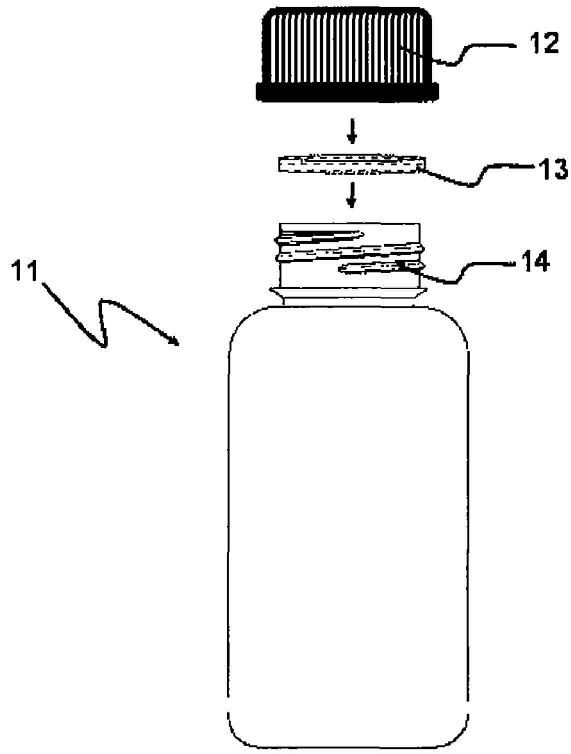


Fig. 1

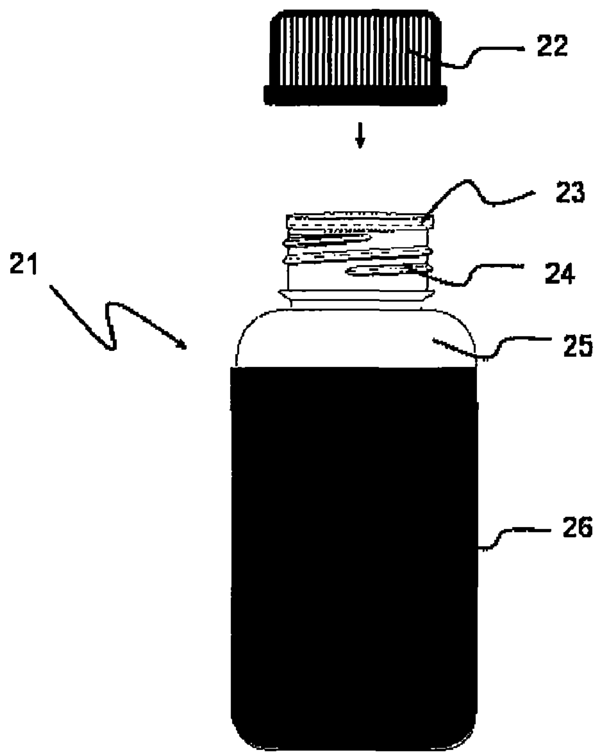


Fig. 2

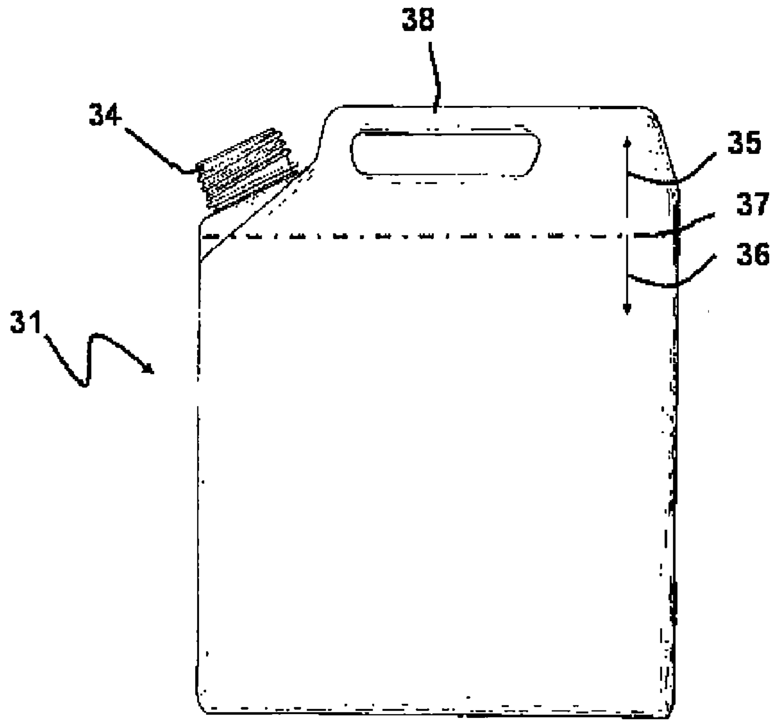


Fig. 3

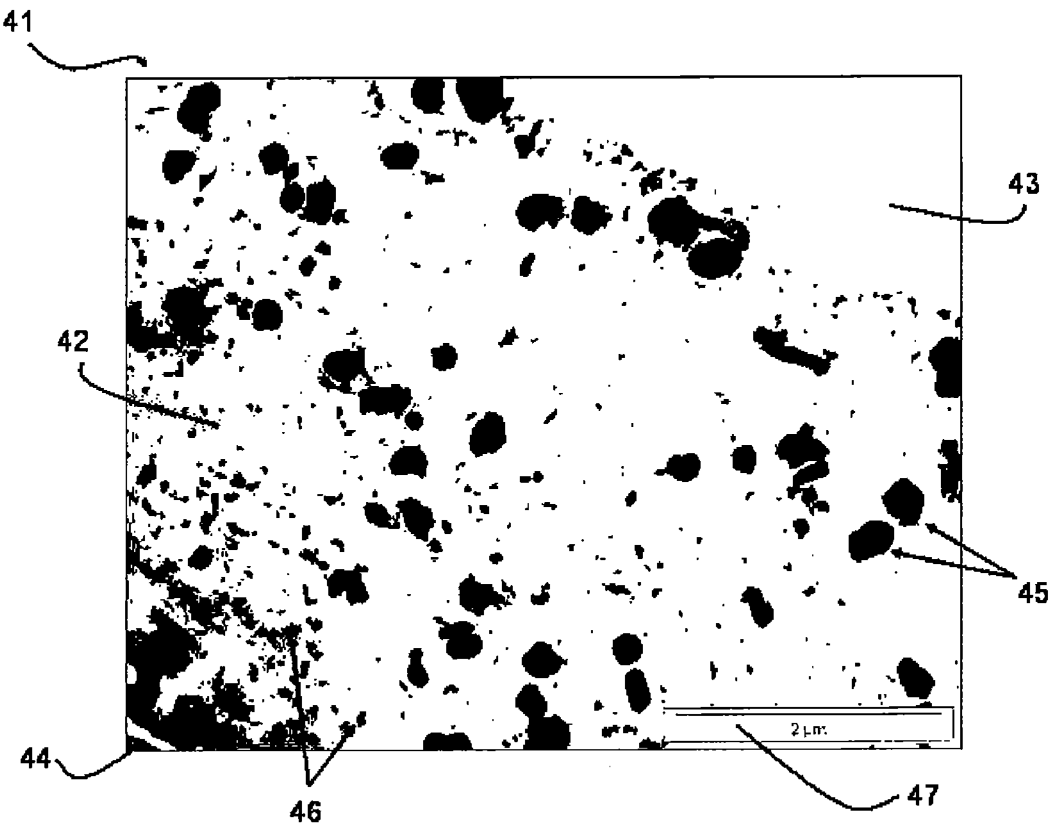


Fig. 4

Europäisches Patentamt
European Patent Office
Office européen des brevets

# EUROPEAN SEARCH REPORT

Application Number
EP 11 19 1663

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 256726 A (KANSAI PAINT CO LTD) 16 September 2004 (2004-09-16) * paragraph [0008]; claims; examples * | 1-15 | INV. C09D11/10 |
| X,D | WO 2008/067202 A2 (HEWLETT PACKARD DEVELOPMENT CO [US]; ORIAKHI CHRISTOPHER O [US]) 5 June 2008 (2008-06-05) * paragraph [0024]; examples * | 1-15 | |
| A | EP 2 161 264 A1 (AGFA GRAPHICS NV [BE]) 10 March 2010 (2010-03-10) * paragraph [0078] * | 1-15 | |
| A | US 2009/000508 A1 (EDISON SARA [US] ET AL) 1 January 2009 (2009-01-01) | 1-15 | |
| A | US 2005/146544 A1 (KONDO AI [JP]) 7 July 2005 (2005-07-07) * examples * | 1-15 | |

TECHNICAL FIELDS SEARCHED (IPC)

C09D

The present search report has been drawn up for all claims

| Place of search | Date of completion of the search | Examiner |
|---|---|---|
| Munich | 16 May 2012 | Schmitz, Volker |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 19 1663

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2012

| Patent document cited in search report | Publication date | Patent family member(s) | Publication date |
|---|---|---|---|
| JP 2004256726 A | 16-09-2004 | NONE | |
| WO 2008067202 A2 | 05-06-2008 | CN 101547984 A | 30-09-2009 |
| | | EP 2097494 A2 | 09-09-2009 |
| | | JP 2010511747 A | 15-04-2010 |
| | | US 2008131614 A1 | 05-06-2008 |
| | | WO 2008067202 A2 | 05-06-2008 |
| EP 2161264 A1 | 10-03-2010 | CN 102149704 A | 10-08-2011 |
| | | EP 2161264 A1 | 10-03-2010 |
| | | JP 2012502131 A | 26-01-2012 |
| | | US 2011195198 A1 | 11-08-2011 |
| | | WO 2010029017 A1 | 18-03-2010 |
| US 2009000508 A1 | 01-01-2009 | AU 2005327207 A1 | 17-08-2006 |
| | | CA 2573625 A1 | 17-08-2006 |
| | | CN 1984974 A | 20-06-2007 |
| | | EP 1786877 A2 | 23-05-2007 |
| | | JP 2008507598 A | 13-03-2008 |
| | | KR 20070048729 A | 09-05-2007 |
| | | US 2009000508 A1 | 01-01-2009 |
| | | WO 2006085992 A2 | 17-08-2006 |
| US 2005146544 A1 | 07-07-2005 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4880465 A
- EP 1388578 A
- US 2007259986 A
- US 7850774 B
- US 2010105807 A
- EP 1911814 A
- EP 1857510 A
- US 6310115 B
- EP 2065362 A
- EP 2161264 A
- EP 2053101 A
- US 2006014848 A
- US 6289654 B


### Non-patent literature cited in the description


- **J. V. CRIVELLO.** *Advances in Polymer Science,* 1984, vol. 62, 1-47
- **CRIVELLO, J.V. et al.** Photoinitiators for Free Radical Cationic. John Wiley and Sons Ltd, 1998, vol. III, 287-294